# EUROPEAN PATENT SPECIFICATION

(11) **EP 1 536 501 B1**
(45) Date of publication and mention of the grant of the patent: **10.08.2011**
(21) Application number: 03762866.6
(22) Date of filing: 27.06.2003
(51) Int. Cl.: H01M 8/02

(54) **METHOD OF MANUFACTURING A FUEL CELL SEPARATOR**
VERFAHREN ZUR HERSTELLUNG EINES BRENNSTOFFZELLENSEPARATORS
PROCEDE DE FABRICATION D'UN SEPARATEUR DE PILE A COMBUSTIBLE

(30) Priority: 03.07.2002 JP 2002194644
(43) Date of publication of application: 01.06.2005
(73) Proprietor: HONDA GIKEN KOGYO KABUSHIKI KAISHA, Minato-ku, Tokyo 107-8556 (JP)
(72) Inventor: KAWACHI, Shinya, c/o Honda Engineering Co., Ltd., Sayama-shi, Saitama 350-1381 (JP); KIMURA, Mikihiko, c/o Honda Engineering Co., Ltd., Sayama-shi, Saitama 350-1381 (JP)
(74) Representative: Taylor, Adam David
(86) International application number: PCT/JP2003/008183
(87) International publication number: WO 2004/006371

(56) References cited:
- EP-A- 0 914 922
- EP-A- 1 501 141
- JP-A- 9 237 633
- JP-A- 9 283 157
- JP-A- 10 074 530
- JP-A- 11 179 755
- JP-A- 11 309 746
- JP-A- 11 309 747
- JP-A- 2000 176 962
- JP-A- 2000 323 147

## Description

### TECHNICAL FIELD

This invention relates to a fuel cell separator having multiple passages provided in an outer peripheral part of the separator and used to guide reaction gases and a reaction product, and a manufacturing method thereof.

### BACKGROUND ART

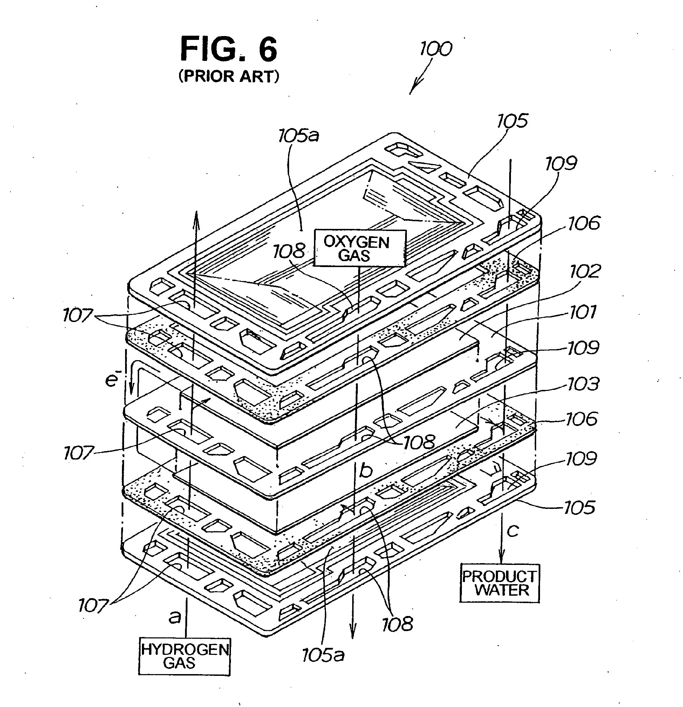

Fig. 6 shows a fuel cell of related art. This fuel cell 100 is made by disposing a negative electrode 102 and a positive electrode 103 respectively on the upper face side and the lower face side of an electrolyte membrane 101, placing a separator 105 on the upper side of the negative electrode 102 and sandwiching an upper side gasket 106 with the peripheral vicinity of the electrolyte membrane 101 and the peripheral vicinity of the upper side separator 105, and placing a separator 105 on the lower side of the positive electrode 103 and sandwiching a lower side gasket 106 with the peripheral vicinity of the electrolyte membrane 101 and the peripheral vicinity of the lower side separator 105.

With this fuel cell 100, hydrogen gas is supplied through multiple hydrogen gas passages 107 as shown by the arrow a. The hydrogen gas in the hydrogen gas passages 107 is guided toward a central part 105a of the upper side separator 105 as shown with an arrow. Oxygen gas is supplied through multiple oxygen gas passages 108 as shown by the arrow b. The oxygen gas in the oxygen gas passages 108 is guided toward the central part 105a of the lower side separator 105 as shown with an arrow.

As a result of hydrogen gas being introduced into the upper side central part 105a, hydrogen molecules (H₂) come into contact with a catalyst included in the negative electrode 102, and as a result of oxygen gas being introduced into the lower side central part 105a, oxygen molecules (O₂) come into contact with a catalyst included in the positive electrode 103, and electrons e^{.} flow as shown with an arrow and a current is produced.

At this time, product water (H₂O) is produced from the hydrogen molecules (H₂) and the oxygen molecules (O₂), and this product water flows through multiple product water passages 109 as shown by the arrow c.

In this fuel cell 100, to maintain resistance to corrosion of the gas passages 107, 108 and the product water passages 109, it is necessary for the gas passages 107, 108 and the product water passages 109 to be sealed. To achieve this, in the manufacture of the fuel cell 100, the upper side gasket 106 is sandwiched in the gap between the peripheral vicinity of the electrolyte membrane 101 and the peripheral vicinity of the upper side separator 105, and the lower side gasket 106 is sandwiched in the gap between the peripheral vicinity of the electrolyte membrane 101 and the peripheral vicinity of the lower side separator 105.

Here, it is desirable for the fuel cell 100 to be compact, and it is necessary for the upper and lower gaskets 106 to be made thin. Consequently, handling of the upper and lower gaskets 106 has been difficult, it has taken time for the upper and lower gaskets 106 to be disposed in the proper positions, and this has constituted a hindrance to raising fuel cell productivity.

As a method of resolving this problem, for example the 'Manufacturing Method of a Silicone Resin - Metal Composite Body' of JP-A-11-309746 has been proposed. According to this method, gaskets can be eliminated by injecting a silicone resin and forming a seal part on the peripheral part of the separator with the injected silicone resin.

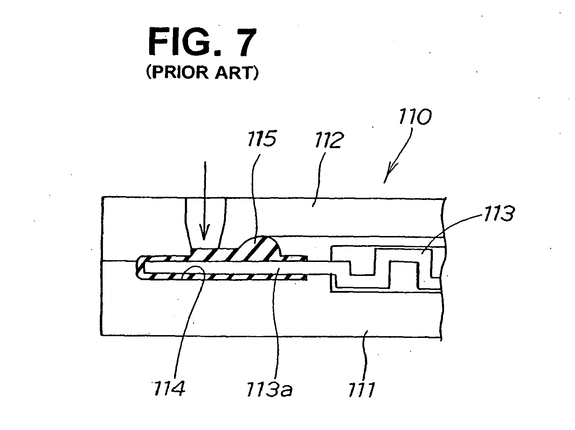

An injection-molding mold for manufacturing a fuel cell separator of related art is shown in Fig. 7, and a separator manufacturing method of related art will now be described.

Referring to Fig. 7, by an injection-molding mold 110 being closed, a separator 113 is inserted in a gap between a fixed die 111 and a moving die 112 and a cavity 114 is formed by the fixed die 111 and the moving die 112, and by the cavity 114 being filled with silicone resin as shown with an arrow, a seal 115 is formed on an outer peripheral part 113a of the separator 113.

By the seal 115 being formed around the peripheral part 113a of the separator 113 like this, the upper and lower gaskets 106, 106 shown in Fig. 6 can be made unnecessary. Therefore, in the manufacture of the fuel cell, it is possible to dispense with a step of incorporating the upper and lower gaskets 106, 106.

To prevent the gas passages and product water passages of the separator 113 from being corroded by the gases and product water, it is necessary for the entire surfaces of the gas passages and the product water passages to be covered. Because of this, it is necessary not only for the upper face and the lower face of the peripheral part 113a of the separator 113 to be covered by the seal 115, but also for the wall faces of the gas passages and product water passages in the peripheral part 113a to be covered by the seal 115.

To cover the entire surfaces of the gas passages and product water passages of the peripheral part 113a with the seal 115 to raise their resistance to corrosion like this, it is necessary to raise the precision of equipment such as the injection-molding mold 110, equipment costs consequently rise, and this constitutes a hindrance to keeping costs down.

Even if the precision of the equipment is raised, it is difficult to surely cover the entire surfaces of the gas passages and product water passages of the peripheral part 113a with the seal 115, and yield in the manufacture of the separators is likely to fall, and this has constituted a hindrance to raising productivity.

Thus, a fuel cell separator has been awaited with which it is possible to secure corrosion resistance of the separator and also raise productivity as well as keeping costs down.

EP-A-0914922 and JP 11-309746 A disclose fuel cell separators comprising silicone rubber injection moulded about a central part.

### DISCLOSURE OF THE INVENTION

This invention provides a method for manufacturing a fuel cell separator having provided in a silicone rubber peripheral part a plurality of gas passages for guiding reaction gases and a plurality of reaction product passages for guiding a reaction product, reaction gases being guided from the gas passages to a metal central part and reaction product produced at the central part being guided to the reaction product passages, wherein the method includes: a step of disposing the metal central part in a cavity of an injection-molding mold; a step of keeping the inside of this cavity at a low temperature so that the silicone rubber does not reactively set and maintains a low viscosity; a step of injecting liquid silicone rubber into the cavity in this state and guiding it to an edge part of the central part; and a step of heating the inside of the cavity to reactively set the silicone rubber guided to the edge part of the central part; wherein the inside of the cavity is heated by heating the central part.

As the rubber for the peripheral part, a silicone rubber having the characteristic that above a certain temperature hardening is steeply accelerated and along with that its viscosity rises is used. Therefore, the silicone rubber can be guided to the edge of the central part at a temperature (a low-viscosity state) before that at which rapid setting occurs and then the temperature quickly raised to reactively harden the silicone rubber. By this means, because as a result of the silicone rubber being molded at a low viscosity the injection pressure can be kept to a low pressure, the occurrence of burrs can be prevented. As a result of the injection pressure being kept down, the incidence of local stresses on the metal central part (of the separator) can be moderated and deformation of the central part can be prevented.

With this manufacturing method, by only the central part being heated quickly to harden the liquid silicone rubber, a heating mechanism for heating the injection-molding mold can be rendered unnecessary. Also, because it is not necessary for the injection-molding mold to be heated, the electrical power needed to heat the silicone rubber can be kept down and distortion arising in the injection-molding mold due to high temperatures can be moderated.

The method can be used to produce a fuel cell separator having provided in an outer peripheral part a plurality of gas passages for guiding reaction gases and a plurality of reaction product passages for guiding a reaction product, reaction gases being guided from the gas passages to a central part and reaction product produced at the central part being guided to the reaction product passages, a fuel cell separator characterized in that the central part is made a metal member and the peripheral part is made a rubber member and a projecting part surrounding the central part is formed integrally with this rubber member.

In this separator, the central part of the separator is made a metal member and the peripheral part of the separator is made a rubber member. By making the peripheral part of the separator a rubber member and forming gas passages and product water passages in this peripheral part like this, it is possible to secure resistance of the gas passages and product water passages to corrosion by the gases and product water.

Also, as a result of the peripheral part of the separator being made a rubber member and gas passages and reaction product passages being formed in this rubber member, because it is not necessary for the wall faces of the gas passages and the product water passages of the separator to be covered with a sealing material as in related art, the peripheral part can be molded with an injection-molding mold of ordinary precision. Consequently, because it is not necessary to use a high-precision injection-molding mold, costs of equipment such as injection- molding molds can be kept down, and cost increases can be suppressed.

Furthermore, by the peripheral part of the separator being made a rubber member, the rubber member can be manufactured relatively simply. Therefore, the yield in manufacturing separators can be raised.

Also, by a projecting part surrounding the central part being formed integrally with the peripheral part, because the peripheral part and the projecting part can be formed easily in a short time, separator productivity can be raised still further.

The rubber member forming the peripheral part of the separator is made of silicone rubber. Although silicone rubber has a different thermal expansion coefficient from the metal member constituting the central part, it is relatively elastic and can absorb differential thermal expansion with respect to the central part. Consequently, the central part deforming and the peripheral part suffering fatigue failure because of differential thermal expansion between the peripheral part and the central part are prevented.

### BRIEF DESCRIPTION OF THE DRAWINGS

Preferred embodiments of the present invention will be described by way of example only and with reference to the accompanying drawings in which :
Fig. 1 is an exploded perspective view of a fuel cell having a fuel cell separator;
Fig. 2 is a sectional view on the line 2-2 in Fig. 1;
Fig. 3 is a sectional view on the line 3-3 in Fig. 2;

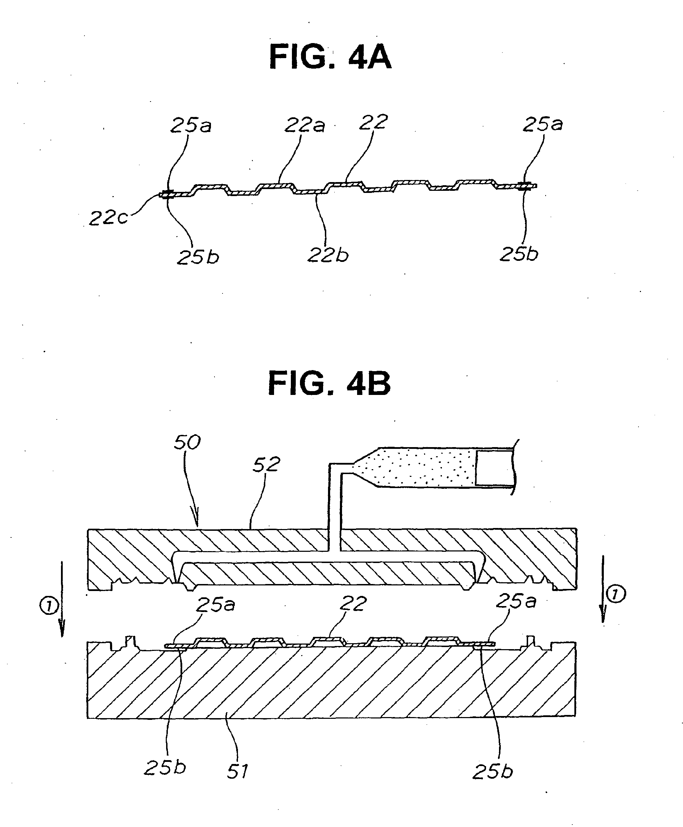

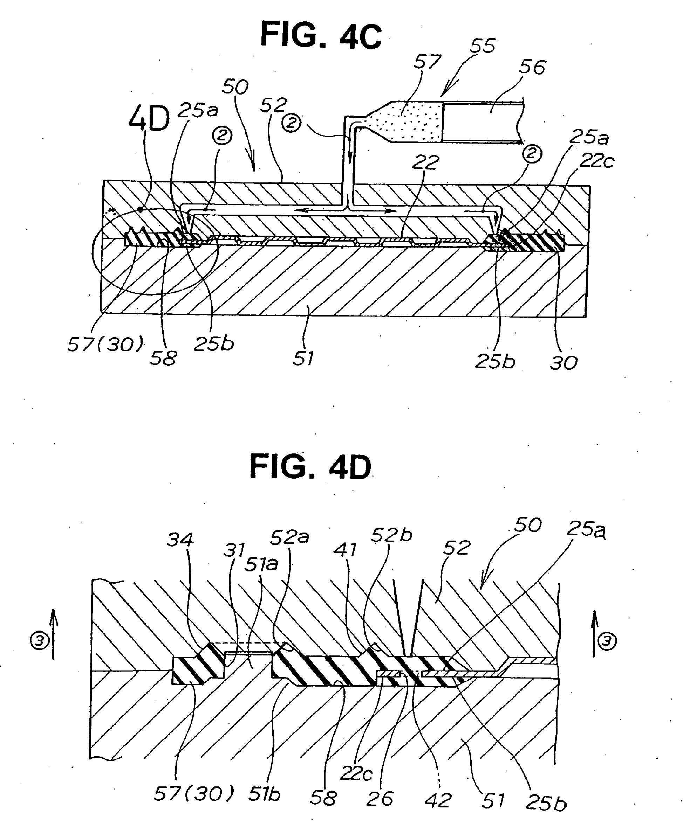

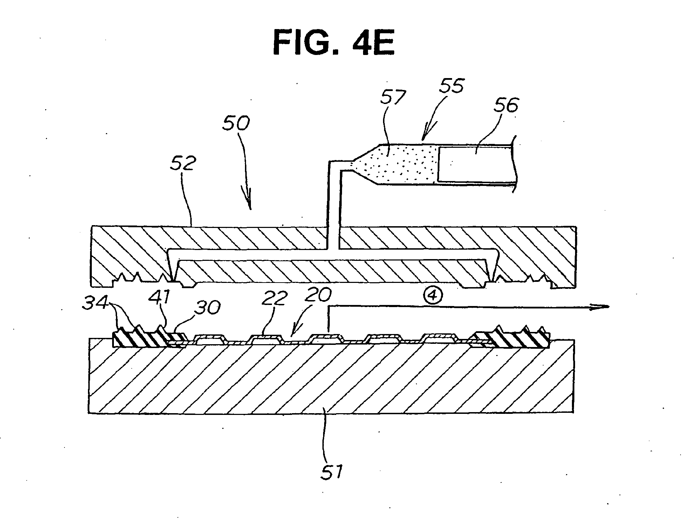

Fig. 4A to Fig. 4E are views showing a method for manufacturing a fuel cell separator according to the invention, Fig. 4A being a view showing a primer treatment having been carried out on the edge of a central part of a separator, Fig. 4B a view showing the central part set on a fixed die of an injection-molding mold, Fig. 4C a view showing a moving die having been lowered to close the mold and molten silicone having been injected into a cavity, Fig. 4D a view showing a part 4D of Fig. 4C enlarged; and Fig. 4E a view showing silicone rubber having reactively set and the moving die having been raised for the separator to be taken out;
Fig. 5 is a graph showing a characteristic of silicone rubber molded to the peripheral part of a fuel cell separator according to the invention;
Fig. 6 is an exploded perspective view showing a fuel cell of related art; and
Fig. 7 is a sectional view showing the manufacture of a fuel cell separator of related art.

### BEST MODE FOR CARRYING OU THE INVENTION

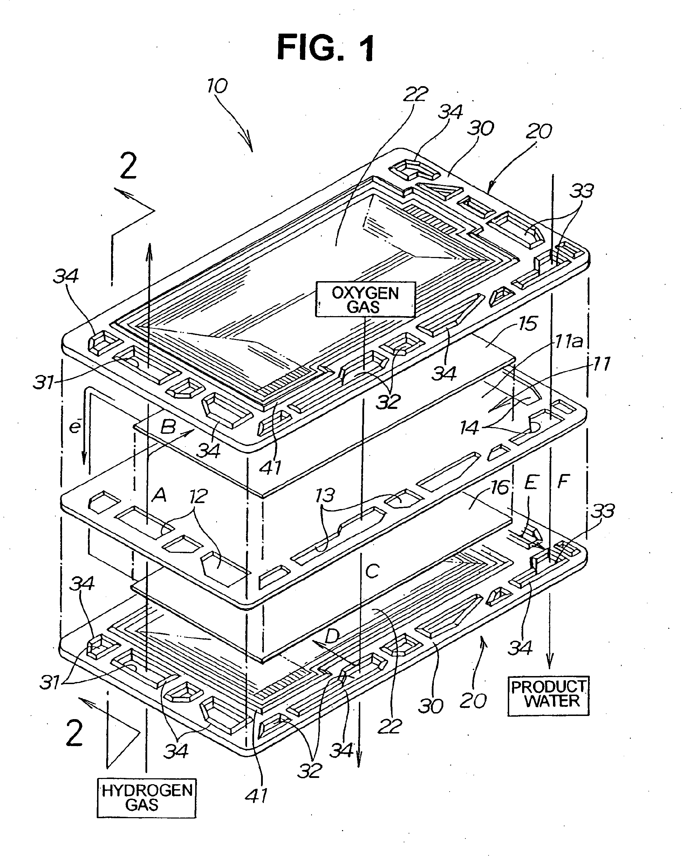

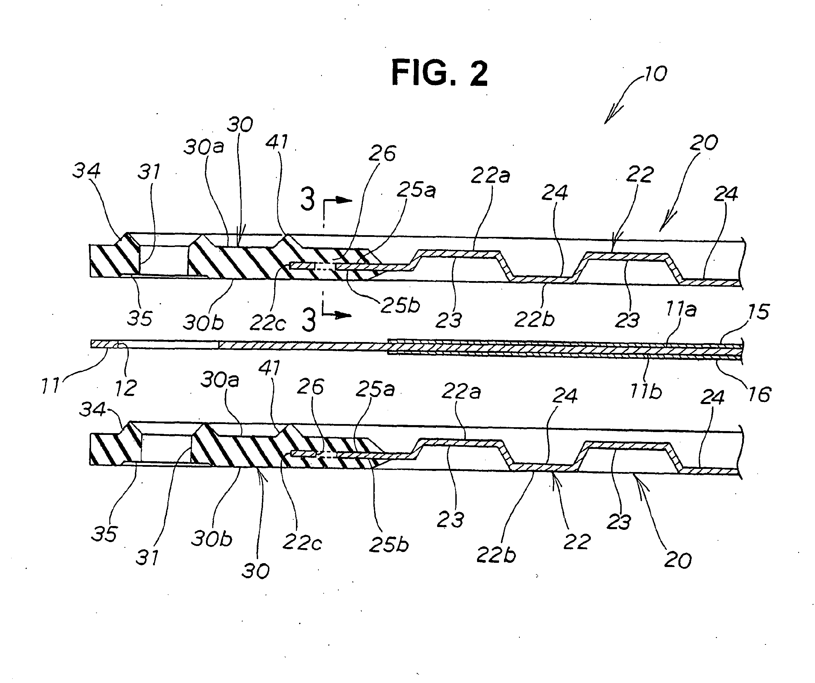

A fuel cell 10 shown in Fig. 1 has a structure wherein a negative electrode 15 and a positive electrode 16 are respectively disposed on the upper face 11a side and the lower face 11b (see Fig. 2) side of an electrolyte membrane 11 and an upper side separator 20 (fuel cell separator) is superposed on the negative electrode 15 and a lower side separator 20 is superposed on the positive electrode 16.

Here, generally the fuel cell 10 made by stacking the electrolyte membrane 11, the negative electrode 15, the positive electrode 16 and the upper and lower separators 20, 20 is referred to as a cell, and multiple cells arrayed in a stack are referred to as a fuel cell; however, in this specification, to facilitate understanding, the cell will be called a fuel cell.

In an outer peripheral part thereof, the electrolyte membrane 11 has multiple hydrogen gas passages (gas passages) 12 for guiding hydrogen gas (a reaction gas), multiple oxygen gas passages (gas passages) 13 for guiding oxygen gas (a reaction gas), and multiple product water passages (reaction product passages) 14 for guiding product water (a reaction product).

The negative electrode 15 and the positive electrode 16 are each formed somewhat smaller than the electrolyte membrane 11. The peripheries of the negative electrode 15 and the positive electrode 16 are positioned inward of the hydrogen gas passages 12, the oxygen gas passages 13 and the product water passages 14.

The upper and lower separators 20 each have a stainless steel (metal) central part 22 and a silicone rubber (rubber) peripheral part 30 around that. A projecting part (projecting central seal part) 41 surrounding the central part 22 is formed integrally with the peripheral part 30.

The peripheral part 30 has multiple hydrogen gas passages (gas passages) 31 for guiding hydrogen gas, multiple oxygen gas passages (gas passages) 32 for guiding oxygen gas, and multiple product water passages (reaction product passages) 33 for guiding product water.

By the peripheral part 30 of each of the separators 20 being made a silicone rubber member and this silicone rubber peripheral part 30 being provided with hydrogen gas passages 31, oxygen gas passages 32 and product water passages 33, corrosion resistance of the hydrogen gas passages 31, the oxygen gas passages 32 and the product water passages 33 with respect to the gases and product water is ensured.

The hydrogen gas passages 31 and oxygen gas passages 32 formed in the peripheral part 30 of each separator 20 are formed in locations such that they are aligned with the respective hydrogen gas passages 12 and oxygen gas passages 13 formed in the peripheral parts of the electrolyte membrane 11 when the fuel cell 10 is assembled.

Also, the multiple product water passages 33 formed in each separator 20 are formed in locations such that they are aligned with the multiple product water passages 14 formed in the electrolyte membrane 11 when the fuel cell 10 is assembled.

With this fuel cell 10, hydrogen gas is supplied to the hydrogen gas passages 31, 12 so as to pass through the hydrogen gas passages 31, 12 as shown by the arrow A and guided to the central part 22 between the negative electrode 15 and the upper side separator 20 as shown by the arrow B. Oxygen gas is supplied to the oxygen gas passages 32, 13 so as to pass through the oxygen gas passages 32, 13 as shown by the arrow C and guided to the central part 22 between the positive electrode 16 and the lower side separator 20 as shown by the arrow D.

As a result of hydrogen gas being guided to the central part 22, hydrogen molecules (H₂) are brought into contact with a catalyst included in the negative electrode 15, and as a result of oxygen gas being guided to the central part 22, oxygen molecules (O₂) are brought into contact with a catalyst included in the positive electrode 16, and electrons e^{.} flow as shown with an arrow and a current is produced.

At this time, product water (H₂O) is produced from the hydrogen molecules (H₂) and the oxygen molecules (O₂). This product water is guided to the product water passages 14, 33 as shown by the arrow E from the central part 22, and flows as shown by the arrow F.

Fig. 2 shows the fuel cell separators 20 each made up of a stainless steel central part 22 and a silicone rubber peripheral part 30.

The central part 22 is a stainless steel plate having multiple flow passages 23 for guiding hydrogen gas and multiple flow passages 24 for guiding oxygen gas formed in its upper face 22a and its lower face 22b, and multiple passages for guiding product water (not shown), and having had an anticorrosion plating treatment carried out on its upper face 22a and lower face 22b.

This central part 22 has primer-treated parts 25a, 25b, on which a primer treatment has been carried out, on its upper and lower faces along its edge part 22c, and has multiple openings 26 provided at a predetermined spacing in the primer-treated parts 25a, 25b.

The shape of the multiple openings 26 may be round holes, slots or rectangular, and there is no restriction on this. The reasons for providing the primer-treated parts 25a, 25b and the openings 26 will be discussed later.

The peripheral part 30 is a frame made of silicone rubber which covers the primer-treated parts 25a, 25b of the central part 22 with silicone rubber and fills the openings 26 with silicone rubber and has the hydrogen gas passages 31, the oxygen gas passages 32 and the product water passages 33 (the flow passages 32, 33 are shown in Fig. 1) formed in it.

On the upper face 30a of the peripheral part 30, projecting passage seal parts 34 are formed along the respective edges of the hydrogen gas passages 31, the oxygen gas passages 32 and the product water passages 33 so as to individually surround the hydrogen gas passages 31, oxygen gas passages 32 and product water passages 33. A projecting central seal part 41 surrounding the central part 22 is formed along the edge 22c of the central part 22.

On the lower face 30b of the peripheral part, passage recesses 35 are formed along the respective edges of the hydrogen gas passages 31, the oxygen gas passages 32 and the product water passages 33 so as to individually surround the hydrogen gas passages 31, oxygen gas passages 32 and product water passages 33.

The multiple projecting passage seal parts 34 are formed so that when the fuel cell 10 is assembled, they are pressed against the passage recesses 35 of the separator 20 disposed above on the other side of the passages 12, 13 and 14 (see Fig. 1 for passages 13, 14) formed in the electrolyte membrane 11.

Because, in the peripheral part 30, the projecting passage seal parts 34 are provided so as to surround each of the hydrogen gas passages 31, each of the oxygen gas passages 32 and each of the product water passages 33, and the projecting central seal part 41 is provided surrounding the central part 22, when the separator 20 is assembled to the fuel cell 10, there is no need to include a gasket for surrounding the central part of the separator or gaskets for surrounding the hydrogen gas passages, the oxygen gas passages and the product water passages as in related art. As a result, the time and labor of incorporating gaskets when assembling the fuel cell 10 can be saved.

Also, because the projecting central seal part 41 is provided on the peripheral part 30, when the fuel cell 10 is assembled, the projecting central seal part 41 can be pressed against the electrolyte membrane 11 to surely seal the central part 22.

By this means it is possible to guide hydrogen gas and oxygen gas introduced to the central part 22 surely to the proper positions and to guide product water produced at the central part 22 surely to the proper positions.

In addition, because the projecting passage seal parts 34 are provided so as to surround the hydrogen gas passages 31, the oxygen gas passages 32 and the product water passages 33 indivi- dually, on assembly of the fuel cell 10, the projecting passage seal parts 34 can be pressed against the passage recesses 35 to surely seal the hydrogen gas passages 31, oxygen gas passages 32 and product water passages 33.

Because the projecting passage seal parts 34 and the central seal part 41 are formed with silicone rubber integrally with the peripheral part 30, when the peripheral part 30 is molded, the passage seal parts 34 and the central seal part 41 can be molded at the same time. Consequently, the peripheral part 30, the passage seal parts 34 and the central seal part 41 can be formed easily in a short time.

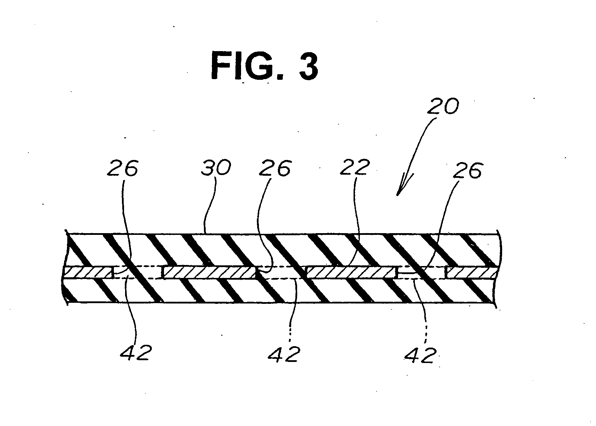

Here, by silicone rubber filling the multiple openings 26 when the upper and lower primer-treated parts 25a, 25b of the central part 22 are covered with silicone rubber, the peripheral part 30 can be provided with anchors 42 in the multiple openings 26 as shown in Fig. 3. By this means it is possible to prevent the peripheral part 30 from detaching from the central part 22 and join the peripheral part 30 strongly to the central part 22.

Here, because the thermal expansion coefficients of the silicone rubber of the peripheral part 30 and the stainless steel of the central part 22 are different, when the peripheral part 30 is joined to the central part 22 directly, there is a possibility of the central part 22 deforming due to differential thermal expansion between the peripheral part 30 and the central part 22 and the peripheral part 30 suffering fatigue failure.

However, by the peripheral part 30 being molded with silicone rubber it becomes possible for the peripheral part 30 to be deformed elastically to some extent, and differential thermal expansion between the peripheral part 30 and the central part 22 can be absorbed by elastic deformation. As a result, the central part 22 deforms under differential thermal expansion between the peripheral part 30 and the central part 22, and the peripheral part 30 is prevented from suffering fatigue failure.

Next, a method for manufacturing the fuel cell separator 20 will be described, on the basis of Fig. 4A to Fig. 4E.

In Fig. 4A, a primer treatment is carried out on the upper and lower faces 22a, 22b along the edge 22c of a metal central part 22. That is, silicone rubber is baked onto the upper and lower faces 22a, 22b at a temperature of 150°C to form primer- treated parts 25a, 25b.

In Fig. 4B, the central part 22 having the primer-treated parts 25a, 25b is placed on a fixed die 51 of an injection-molding mold 50. Then, a moving die 52 is lowered as shown by the arrow [1] and the injection-molding mold 50 is thereby closed.

In Fig. 4C, by a plunger 56 of an injecting device 55 being actuated, molten silicone rubber 57 is injected into a cavity 58 as shown by the arrow [2]. At this time, the inside of the cavity 58 (that is, the injection-molding mold 50) is kept at a low temperature while liquid silicone rubber 57 is injected into the cavity 58, so that the injected silicone rubber 57 does not undergo reactive setting and maintains a low viscosity.

Fig. 4D shows molten silicone rubber 57 having been injected into the cavity. With multiple projections 51a formed on the fixed die 51 in the cavity 58 made to project as far as the moving die 52, and multiple shoulder parts 51b protruding inside the cavity 58, the cavity 58 is filled with the molten silicone rubber 57.

As a result of the molten silicone rubber 57 being injected into the cavity 58 it is guided to the edge 22c of the central part 22 and the upper and lower primer-treated parts 25a, 26b of the central part 22 are covered with the molten silicone rubber 57.

Here, although the metal central part 22 is a metal member, because the upper and lower primer-treated parts 25a, 25b have been provided around the periphery of the central part 22, the peripheral part 30 can be fixed to the edge 22c of the central part 22 well.

The silicone rubber 57 in this liquid state is reactively set at the edge of the central part 22 by rapid heating of the inside of the cavity 58 (that is, of the injection-molding mold 50).

By this means, in the molding of the peripheral part 30, it is possible to form multiple hydrogen gas passages 31, multiple oxygen gas passages 32 and multiple product water passages 33 (the flow passages 32, 33 are shown in Fig. 1) and to mold passage recesses 35 (see Fig. 2) around the edges of these flow passage 31, 32 and 33.

Also, by passage sealing grooves 52a and a central sealing groove 52b being provided in the molding face of the moving die 52, when the peripheral part 30 is molded, the passage seal parts 34 and the central seal part 41 can be molded at the same time.

Additionally, when the peripheral part 30 is molded, by the multiple openings 26 being filled with the silicone rubber 57, anchors 42 can be simultaneously provided in the openings 26.

Because multiple passage seal parts 34, a central seal part 41 and anchors 42 can be molded simultaneously like this when the peripheral part 30 is molded, a fuel cell separator 20 can be manufactured relatively easily.

After the silicone rubber 57 injected into the cavity 58 has set reactively the moving die 52 is raised as shown by the arrow [3] and the injection-molding mold 50 is thereby opened.

In Fig. 4E, after the injection-molding mold 50 is opened, the fuel cell separator 20 is removed from the fixed die 51 as shown by the arrow [4] and the process of manufacturing the fuel cell separator 20 ends.

As described above with reference to Fig. 4A through Fig. 4E, by the peripheral part of the separator being made a rubber member, the rubber member can be manufactured relatively easily. Consequently, because the manufacturing yield of separators can be raised, the productivity of separators can be increased.

As a result of the projecting passage seal parts 34 formed integrally with the peripheral part 30 so as to individually surround the hydrogen gas passages 31, the oxygen gas passages 32 and the product water passages 33 and the projecting central seal part 41 surrounding the central part 22 being formed integrally with the peripheral part 30, the fuel cell separator 20 can be formed easily in a short time and productivity can be increased still more.

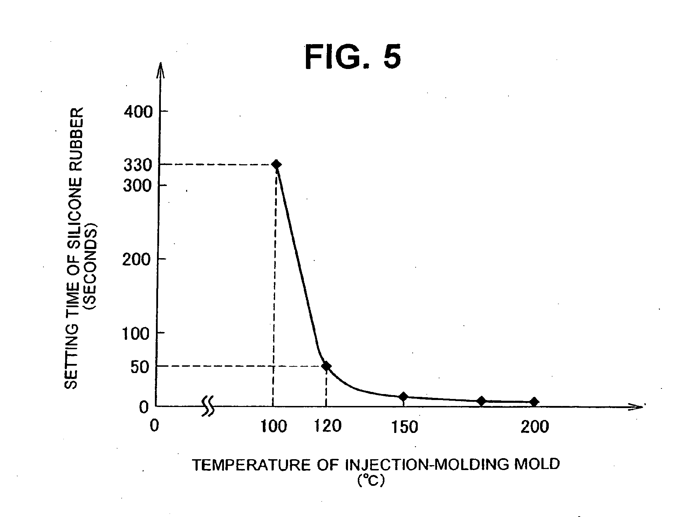

Next, a specific example of the fuel cell separator manufacturing method explained with reference to Fig. 4A through Fig. 4E will be described, on the basis of the graph of Fig. 5 showing a characteristic of silicone rubber. The vertical axis shows setting time of the silicone rubber and the horizontal axis shows temperature of the silicone rubber.

This graph shows a typical characteristic of silicone rubber. As shown in the graph, at low temperatures of 100 to 120°C, the setting time of silicone rubber can be made long, at 50 to 330 seconds.

At high temperatures of 120 to 200°C, the setting time of silicone rubber can be made short, at less than 50 seconds.

Therefore, by keeping the inside of the cavity 58 (that is, the injection-molding mold 50) in a low temperature region of for example 100 to 120°C as shown in Fig. 4C, it is possible to fill the inside of the cavity 58 with liquid silicone rubber 57 in such a way that the silicone rubber 57 does not reactively set and also is kept at a low viscosity.

After the molten silicone rubber 57 is guided to the edge 22c of the central part 22, by the inside of the cavity 58 being rapidly heated to a high temperature of for example 120 to 200°C, the liquid silicone rubber 57 introduced can be made to set reactively at the edge 22c of the central part 22.

By molding the silicone rubber 57 in a state of low viscosity like this, it is possible to suppress falls in injection pressure. Consequently, the incidence of local stresses on the metal central part 22 can be moderated and the occurrence of deformation and burring of the central part 22 can be prevented.

Accordingly, a step of removing burrs after the central part 22 is molded can be made unnecessary, and also a step of correcting deformation of the central part 22 can be made unnecessary, and consequently it is possible to simplify the separator production process and raise productivity.

In the fuel cell separator manufacturing method of the foregoing embodiment, an example was described wherein the injection-molding mold 50 is rapidly heated to set the liquid silicone rubber 57; however, in the invention, it is also possible to adopt another embodiment wherein the injection-molding mold 50 is not heated and only the central part 22 is heated rapidly to set the liquid silicone rubber 57.

Whereas in the foregoing embodiment a heating mechanism for heating the injection-molding mold 50 is needed, because in the other embodiment it is not necessary to heat the injection-molding mold 50, the heating device for heating the injection-molding mold 50 can be rendered unnecessary. Therefore, plant costs can be kept down and also electrical power used for steady-state heating can be eliminated.

Also, because it is not necessary to heat the injection- molding mold 50, distorting affects on the injection-molding mold 50 caused by high temperatures can be moderated. By moderating the distorting affects of high temperatures on the injection- molding mold 50 like this, it is possible to lengthen the maintenance intervals of the injection-molding mold 50 and to raise the availability of the injection-molding mold 50 and so raise productivity.

Although in the embodiment described above an example was described wherein the peripheral part 30, the multiple passage seal parts 34 and the central seal part 41 were molded integrally from silicone rubber, the invention is not limited to this, and alternatively some other rubber material or resin material can be used.

Also, the peripheral part 30, the multiple passage seal parts 34 and the central seal part 41 can alternatively each be formed individually, and furthermore these members 30, 34 and 41 can each be formed using a different material.

Also, although in the embodiment described above stainless steel was used as an example of a metal member for forming the central part 22 of the fuel cell separator 20, the metal member used to form the central part 22 is not limited to this.

Although in the above embodiment an example was described wherein projecting passage seal parts 34 surrounding each of the gas passages 31, 32 and the product water passages 33 were provided on the peripheral part 30 of the separator 20, alternatively the passage seal parts 34 may be dispensed with.

Although in the embodiment described above hydrogen gas and oxygen gas were used as examples of reaction gases and product water was used as an example of a reaction product, the invention is not limited to this and can also be applied to other reaction gases and reaction products.

### INDUSTRIAL APPLICABILITY

As described above, as a result of the peripheral part of a separator being made a silicone rubber member and gas passages and product water passages being formed in this peripheral part, corrosion resistance of the gas passages and product water passages with respect to gases and product water is ensured and the invention is useful in the manufacture of fuel cells.

## Claims

1. A method for manufacturing a fuel cell separator (20) having provided in a silicone rubber peripheral part (30) multiple gas passages (31, 32) for guiding reaction gases and multiple reaction product passages (33) for guiding a reaction product, reaction gases being guided from the gas passages (31, 32) to a metal central part (22) and reaction product produced at the central part (22) being guided to the reaction product passages (33), wherein the method includes:
a step of disposing the metal central part (22) in a cavity (58) of an injection-molding mold (50);
a step of keeping the inside of this cavity (58) at a low temperature so that the silicone rubber (57) does not reactively set and maintains a low viscosity;
a step of injecting liquid silicone rubber (57) into the cavity (58) in this state and guiding it to an edge part (22c) of the central part (22); and
a step of heating the inside of the cavity (58) to reactively set the silicone rubber (57) guided to the edge part (22c) of the central part (22);
wherein the inside of the cavity (58) is heated by heating the central part (22).

## Patentansprüche

1. Verfahren zur Herstellung eines Brennstoffzellenseparators (20), welcher eine Mehrzahl von in einem Silikongummi-Umfangsabschnitt (30) bereitgestellten Gasdurchgängen (31, 32) zum Führen von Reaktionsgasen sowie eine Mehrzahl von Reaktionsproduktdurchgängen (33) zum Führen eines Reaktionsprodukts aufweist, wobei Reaktionsgase von den Gasdurchgängen (31, 32) zu einem zentralen Metallabschnitt (22) geführt werden und wobei in dem zentralen Abschnitt (22) erzeugtes Reaktionsprodukt zu den Reaktionsproduktdurchgängen (33) geführt wird, wobei das Verfahren umfasst:
einen Schritt, in welchem der zentrale Metallabschnitt (22) in einer Kavität (58) einer Spritzgussform (50) angeordnet wird;
einen Schritt, in welchem das Innere dieser Kavität (58) auf einer niedrigen Temperatur gehalten wird, so dass das Silikongummi (57) nicht reaktiv aushärtet und eine geringe Viskosität behält;
einen Schritt, in welchem flüssiges Silikongummi (57) in die Kavität (58) in diesem Zustand injiziert wird und in welchem es zu einem Randabschnitt (22c) des zentralen Abschnitts (22) geführt wird; und
einen Schritt, in welchem das Innere der Kavität (58) erhitzt wird, um das zu dem Randabschnitt (22c) des zentralen Abschnitts (22) geführte Silikongummi (57) reaktiv auszuhärten;
wobei das Innere der Kavität (58) durch Erhitzen des zentralen Abschnitts (22) erhitzt wird.

## Revendications

1. Procédé pour fabriquer un séparateur (20) de pile à combustible ayant prévus dans une partie périphérique en caoutchouc de silicone (30), plusieurs passages de gaz (31, 32) pour guider les gaz de réaction et plusieurs passages de produit de réaction (33) pour guider un produit de réaction, les gaz de réaction étant guidés à partir des passages de gaz (31, 32) jusqu'à une partie centrale métallique (22) et le produit de réaction produit au niveau de la partie centrale (22) étant guidé jusqu'aux passages de produit de réaction (33), dans lequel le procédé comprend :
une étape consistant à disposer la partie centrale métallique (22) dans une cavité (58) d'un moule (50) pour le moulage par injection ;
une étape consistant à maintenir l'intérieur de cette cavité (58) à une basse température de sorte que le caoutchouc de silicone (57) ne durcit pas par réaction et maintient une faible viscosité ;
une étape consistant à injecter du caoutchouc de silicone liquide (57) dans la cavité (58) dans cet état et à le guider jusqu'à une partie de bord (22c) de la partie centrale (22) ; et
une étape consistant à chauffer l'intérieur de la cavité (58) pour faire durcir par réaction le caoutchouc de silicone (57) guidé jusqu'à la partie de bord (22c) de la partie centrale (22) ;
dans lequel l'intérieur de la cavité (58) est chauffé en chauffant la partie centrale (22).
